# EUROPÄISCHE PATENTANMELDUNG

(11) **EP 4 607 179 A1**
(43) Veröffentlichungstag der Anmeldung: **27.08.2025**
(21) Anmeldenummer: 25157362.2
(22) Anmeldetag: 12.02.2025
(51) Int. Cl.: G01N 21/15, G02B 27/00, G02B 1/18, G01N 21/552

(54) **OPTISCHES ELEMENT UND SELBSTREINIGENDE OPTIKEINHEIT**

(30) Priorität: 23.02.2024 DE 102024105225
(71) Anmelder: IRPC Infrared - Process Control GmbH, 21079 Hamburg (DE)
(72) Erfinder: Bischof, Robert, 22880 Wedel (DE)
(74) Vertreter: Werner, André

(57) **Zusammenfassung**

Die Erfindung betrifft ein optisches Element (1) mit einem elektrisch nicht leitfähigen, für elektromagnetische Strahlung durchlässigen Grundmaterial (1.1), das an mindestens einer Oberfläche einen elektrisch leitfähigen Materialbereich (1.2) aufweist, welcher als spannungsführende Elektrode (2) einer Elektrolysezelle zur elektrochemischen Reinigung dient. Die Elektrode (2) des optischen Elements (1) bildet zusammen mit einer Gegenelektrode (3) und einer Spannungsquelle (4) eine selbstreinigende Optikeinheit für den Einsatz in einer ein elektrisch leitfähiges Fluid (5) enthaltenden elektrolytisch aktiven Umgebung. Die elektrochemische Selbstreinigungstechnologie für optische Elemente (1) ermöglicht unter anderem eine zuverlässige und wartungsarme Nutzung optischer Sensoren in anspruchsvollen Umgebungen.

## Beschreibung

Die Erfindung betrifft ein optisches Element aus einem elektrisch nicht leitfähigen, für elektromagnetische Strahlung zumindest in einem vorgegebenen Spektralbereich durchlässigen Grundmaterial sowie eine selbstreinigende Optikeinheit. Das optische Element und die selbstreinigende Optikeinheit eignen sich insbesondere für Messinstrumente, die in Elektrolyten zum Einsatz kommen.

Optische Messmethoden zur Elektrolytanalyse bieten eine schnelle und präzise Möglichkeit, die chemische Zusammensetzung und physikalischen Eigenschaften einer Elektrolytlösung zu bestimmen. Sie nutzen die Wechselwirkung von Licht mit der Probe, um Informationen über Konzentrationen, molekulare Strukturen, Bindungszustände und elektrochemische Prozesse zu gewinnen.

Die ATR-Spektroskopie (Attenuated Total Reflection) ist eine Methode der Infrarotspektroskopie, die sich speziell für die Analyse von Flüssigkeiten, insbesondere Elektrolytlösungen, eignet. Sie ermöglicht eine schnelle Untersuchung der chemischen Zusammensetzung ohne aufwendige Probenvorbereitung oder den Einsatz von Flüssigkeitsküvetten. Das Verfahren basiert auf dem Prinzip der Totalreflexion innerhalb eines hochbrechenden Kristalls, wodurch ein evaneszentes Feld entsteht, das eine Wechselwirkung mit der angrenzenden Probe ermöglicht. Dadurch können molekulare Schwingungen detektiert und Informationen über chemische Bindungen, Konzentrationen und Reaktionsverläufe gewonnen werden.

Ein wesentlicher Vorteil der ATR-Spektroskopie ist ihre Eignung für hochkonzentrierte, trübe oder viskose Lösungen, da die direkte Wechselwirkung mit der Probe Lichtstreuung und Signalverluste minimiert. Zudem erfolgt die Messung in Echtzeit, wodurch eine kontinuierliche Überwachung elektrochemischer Prozesse möglich ist. Dies macht die Methode besonders wertvoll für Anwendungen in der Batterieforschung, Galvanotechnik und Korrosionsanalytik.

Allerdings kann es durch den direkten Kontakt zwischen dem optischen Element, dem ATR-Kristall, und dem Elektrolyten zu Oberflächenverunreinigungen kommen. Ablagerungen von Salzen, Metallionen oder organischen Verbindungen können die optischen Eigenschaften des Kristalls beeinträchtigen und zu Messabweichungen führen. Besonders in elektrochemischen Systemen, in denen sich Metalloxide oder Reaktionsprodukte bilden, besteht das Risiko einer Verfälschung der Spektraldaten. Um die Messgenauigkeit sicherzustellen, sind daher regelmäßige Reinigung, der Einsatz chemisch stabiler ATR-Materialien und/oder eine optimierte Elektrolytströmung erforderlich.

Aufgabe der Erfindung ist es, ein optisches Element bereitzustellen, das ohne mechanischen Eingriff auf die optischen Oberflächen reinigbar ist und zum Beispiel als Teil eines Messinstruments in elektrolytischen Umgebungen eingesetzt werden kann, um dauerhaft präzise Messergebnisse zu liefern. Insbesondere soll verhindert werden, dass sich Ablagerungen oder Verunreinigungen auf der Oberfläche des optischen Elements bilden, die die optischen Eigenschaften beeinträchtigen und zu Messabweichungen führen. Ziel ist es, eine Möglichkeit zu schaffen, die eine kontinuierlich hohe optische Qualität sicherstellt, ohne dass ein manueller Reinigungseingriff erforderlich ist.

Diese Aufgabe wird durch ein optisches Element mit den Merkmalen nach Anspruch 1 sowie eine selbstreinigende Optikeinheit nach Anspruch 7 gelöst. Zweckmäßige Weiterbildungen der Erfindung sind in den Ansprüchen 2 bis 6 sowie 8 bis 10 aufgeführt.

Nach Maßgabe der Erfindung ist das optische Element aus einem elektrisch nicht leitfähigen Grundmaterial aufgebaut, welches für elektromagnetische Strahlung zumindest in einem vorgegebenen Spektralbereich durchlässig ist. Der vorgegebene Spektralbereich ist ein bestimmter Abschnitt des elektromagnetischen Spektrums, der durch eine definierte Spanne von Wellenlängen oder Frequenzen charakterisiert ist. Beispielsweise umfasst der sichtbare Spektralbereich Wellenlängen von etwa 400 nm bis 700 nm, was dem Licht entspricht, das das menschliche Auge wahrnehmen kann. Daran angrenzend liegt der Ultraviolettbereich (UV), der kürzere Wellenlängen unterhalb von 400 nm aufweist. Im längeren Wellenlängenbereich folgt das Infrarotspektrum (IR), das von etwa 700 nm bis 1 mm reicht und in der Thermografie, Fernbedienungstechnik oder der Spektroskopie zur Analyse chemischer Substanzen Anwendung findet.

Das optische Element kann zum Beispiel eine Scheibe, eine Linse, ein Prisma oder dergleichen sein, die oder das jeweils aus dem für elektromagnetische Strahlung, insbesondere für Infrarotstrahlung, durchlässigen, elektrisch nicht leitfähigen Grundmaterial aufgebaut ist.

Das optische Element weist an mindestens einer Oberfläche, d. h. im freien bzw. nicht bedeckten, optisch aktiven Oberflächenbereich, einen elektrisch leitfähigen Materialbereich auf, der durch Dotierung des Grundmaterials und/oder durch das Aufbringen einer elektrisch leitfähigen Beschichtung erzeugt wird. Im Regelfall ist, sofern im Fall einer Dotierung nicht das gesamte Grundmaterial durchdrungen ist, der elektrisch leitfähige Materialbereich als Schicht im oberflächennahen Bereich bzw. an der Oberfläche des optischen Elements ausgebildet. Die Oberfläche des optischen Elements bildet üblicherweise eine definierte geometrische Form, zum Beispiel eine ebene oder eine gekrümmte Fläche, um die gewünschte optische Funktion des optischen Elements sicherzustellen. Der elektrisch leitfähige Materialbereich ist so ausgestaltet, dass er für elektromagnetische Strahlung zumindest in dem vorgegebenen Spektralbereich durchlässig bleibt, sodass die optische Funktion des optischen Elements erhalten bleibt bzw. nicht unzulässig beeinträchtigt wird.

Erfindungsgemäß ist der elektrisch leitfähige Materialbereich als spannungsführende Elektrode einer Elektrolysezelle ausgebildet.

Die vorgeschlagene selbstreinigende Optikeinheit zum Einsatz in einer elektrisch leitfähiges Fluid enthaltenden elektrolytisch aktiven Umgebung umfasst das beschriebene optische Element, eine Gegenelektrode, die in einem vorgegebenen räumlichen Abstand zu der durch den elektrisch leitfähigen Materialbereich des optischen Elements gebildeten Elektrode angeordnet ist, sowie eine Spannungsquelle, die mit einem Pol an die durch den elektrisch leitfähigen Materialbereich des optischen Elements gebildete Elektrode und mit dem anderen Pol an die Gegenelektrode zur Ausbildung eines elektrischen Feldes zwischen der durch den elektrisch leitfähigen Materialbereich des optischen Elements gebildeten Elektrode und der Gegenelektrode angeschlossen ist. Zwischen der durch den elektrisch leitfähigen Materialbereich des optischen Elements gebildeten Elektrode und der Gegenelektrode ist ein definierter Zwischenraum ausgebildet, in dem sich bei bestimmungsgemäßem Einsatz das elektrisch leitfähige Fluid, auch Elektrolyt bezeichnet, befindet.

Die selbstreinigende Optikeinheit bildet mithin eine Reinigungsanordnung aus dem zu reinigenden optischen Element und der in definiertem Abstand, in räumlicher Nähe zu der zu reinigenden Oberfläche des optischen Elements angeordneten Gegenelektrode, wobei die durch den elektrisch leitfähigen Materialbereich des optischen Elements gebildete Elektrode und die Gegenelektrode mit unterschiedlicher Polung an eine Spannungsquelle, vorzugsweise eine Gleichspannungsquelle, angeschlossen sind. Die Gegenelektrode kann zum Beispiel als Ringelektrode ausgebildet sein.

Die selbstreinigende Optikeinheit kann zudem das elektrisch leitfähige Fluid der elektrolytisch aktiven Umgebung umfassen, das den Zwischenraum zwischen der durch den elektrisch leitfähigen Materialbereich des optischen Elements gebildeten Elektrode und der Gegenelektrode füllt. Die durch den elektrisch leitfähigen Materialbereich des optischen Elements gebildete Elektrode, die Gegenelektrode und das den Zwischenraum zwischen der durch den elektrisch leitfähigen Materialbereich des optischen Elements gebildeten Elektrode und der Gegenelektrode ausfüllende elektrisch leitfähige Fluid bilden bei bestimmungsgemäßer Anwendung die Elektrolysezelle.

Der als Elektrode der Elektrolysezelle ausgebildete elektrisch leitfähige Materialbereich im freien, optisch aktiven Oberflächenbereich des optischen Elements ermöglicht die Selbstreinigung in einer elektrolytisch aktiven Umgebung, d. h. innerhalb des elektrisch leitfähigen Fluids bzw. Elektrolyts. Der elektrisch leitfähige Materialbereich ist mithin insbesondere im Bereich der zu reinigenden, medienberührenden Oberflächen des optischen Elements ausgebildet. Hierdurch wird die elektrochemische Reinigung des optischen Elements, d. h. eine kontinuierliche Entfernung von Ablagerungen und Verunreinigungen auf der Oberfläche des optischen Elements, ermöglicht. Es wird sichergestellt, dass die optischen Eigenschaften, insbesondere die Durchlässigkeit für elektromagnetische Strahlung in dem vorgegebenen Spektralbereich, langfristig erhalten bleiben.

Dies führt bei Anwendung des optischen Elements für optische Messinstrumente zu präziseren und zuverlässigeren Messergebnissen, insbesondere beim Einsatz in aggressiven oder verunreinigten Umgebungen. Manuelle Reinigungsprozesse, die üblicherweise mit Wartungsaufwand, potenziellen Beschädigungen des optischen Elements und einer Unterbrechung des Messbetriebs verbunden sind, können so eingespart werden.

Durch die elektrochemische Reinigung kann das optische Element automatisiert und bedarfsgerecht gereinigt werden, ohne dass ein mechanischer Eingriff erforderlich ist. Es kann insbesondere vorgesehen sein, die Reinigungsschaltung nur bei Bedarf zu aktivieren, d. h., die elektrische Spannung nur bei Bedarf an den elektrisch leitfähigen Materialbereich und die Gegenelektrode anzulegen. Dies erhöht die Langzeitstabilität und Lebensdauer des optischen Elements und reduziert Betriebskosten.

Das erfindungsgemäße optische Element ist in bestehende Systeme ohne konstruktive Änderungen integrierbar, insbesondere in Bereichen wie der Spektroskopie, der Sensorik und der chemischen Analytik.

Die erfindungsgemäße selbstreinigende Optikeinheit mit dem optischen Element kann gezielt mit einer vorgegebenen Spannung, üblicherweise einer Gleichspannung, zur Selbstreinigung beaufschlagt bzw. betrieben werden. Sobald das optische Element in ein elektrisch leitfähiges Fluid eingebracht wird und eine elektrische Spannung zwischen der Elektrode des optischen Elements und der Gegenelektrode angelegt wird, setzt eine elektrochemische Reaktion ein. Diese Reaktion führt dazu, dass an der Oberfläche des optischen Elements chemische Prozesse stattfinden, die die Ablösung von Ablagerungen, Verunreinigungen oder unerwünschten Rückständen bewirken. Je nach Art der Verschmutzung können Reduktions- oder Oxidationsreaktionen an der Elektrode ablaufen, wodurch sich unerwünschte Partikel lösen oder in lösliche Verbindungen umgewandelt werden.

Ein häufiges Beispiel für diesen Mechanismus ist die elektrolytische Zersetzung von organischen Ablagerungen durch Oxidation an der Anode oder die Reduktion von Metalloxiden an der Kathode. Durch diesen Prozess werden Verunreinigungen auf der optischen Oberfläche ohne mechanischen Eingriff entfernt, wodurch die optische Transparenz des optischen Elements erhalten bleibt und präzise Messergebnisse sichergestellt werden.

Die Reinigung erfolgt dabei gezielt und kann bei Bedarf aktiviert werden, indem die Spannung an die Elektroden angelegt wird. Sobald die Selbstreinigung abgeschlossen ist, kann das System wieder in seinen normalen Betriebsmodus übergehen, ohne dass eine manuelle Wartung oder ein Ausbau des optischen Elements erforderlich ist. Dieser automatisierte, kontaktlose Reinigungsprozess ermöglicht eine längere Lebensdauer des optischen Elements und eine durchgehende Funktionsfähigkeit.

Der Selbstreinigungseffekt des optischen Elements bietet zahlreiche Anwendungsmöglichkeiten in der Messtechnik, insbesondere in Umgebungen, in denen optische Sensoren kontinuierlich und zuverlässig arbeiten müssen, ohne durch Ablagerungen oder Verunreinigungen beeinträchtigt zu werden.

Ein wichtiges Anwendungsbeispiel findet sich in der Prozessanalytik von Flüssigkeiten, etwa in der chemischen Industrie oder der Umweltüberwachung. Hier werden optische Sensoren zur Infrarotspektroskopie (ATR-Spektroskopie) eingesetzt, um die chemische Zusammensetzung von Elektrolytlösungen, Abwässern oder industriellen Prozessmedien zu bestimmen. Das optische Element bzw. die Optikeinheit kann eine Infrarot-Messzelle oder Teil einer Infrarot-Messzelle, zum Beispiel ein ATR-Element für die Infrarotspektroskopie, sein. Da sich in solchen Flüssigkeiten oft Salzablagerungen, Metallionen oder organische Rückstände (zum Beispiel Tenside aber auch Mikroorganismen, Algen, Bakterien und andere biologischen Stoffe) auf den optischen Oberflächen absetzen, würde dies die Messgenauigkeit beeinträchtigen. Durch die elektrochemische Selbstreinigung bleibt das optische Element frei von Verunreinigungen, sodass langfristig präzise Messwerte geliefert werden können.

Ein weiteres Beispiel ist der Einsatz in der Batterieforschung und elektrochemischen Analyse. In Lithium-Ionen-Batterien oder Brennstoffzellen werden elektrochemische Prozesse oft über optische Messmethoden überwacht, um den Ionentransport oder Veränderungen in der Elektrolytchemie zu analysieren. Die elektrolytische Umgebung begünstigt jedoch Ablagerungen und Reaktionsprodukte, die auf der Oberfläche optischer Sensoren haften bleiben könnten. Durch den Selbstreinigungseffekt können diese Ablagerungen entfernt werden, ohne dass der Messbetrieb unterbrochen werden muss, was eine kontinuierliche Echtzeitüberwachung ermöglicht.

Auch in der medizinischen Diagnostik kann die Technologie genutzt werden, beispielsweise in automatisierten Laboranalysesystemen, die optische Verfahren zur Flüssigkeitsanalyse verwenden. Hier sorgt die Selbstreinigungsfunktion dafür, dass optische Detektoren nicht durch Proteine, Blutbestandteile oder andere biologische Rückstände verunreinigt werden, was die Genauigkeit und Wiederholbarkeit von Laboruntersuchungen verbessert.

Ein weiteres relevantes Feld ist die Trink- und Abwasseranalyse, bei der optische Sensoren zur Überwachung der Wasserqualität in Kläranlagen oder in der Umweltüberwachung eingesetzt werden. Durch die elektrochemische Selbstreinigung bleibt die Optikeinheit funktionsfähig, selbst wenn die Sensoren über lange Zeiträume in Schmutzwasser oder mineralhaltigen Flüssigkeiten eingesetzt werden.

Gemäß einer Ausgestaltung, vor allem für den Einsatz als ATR-Element, kann das Grundmaterial des optischen Elements ein kristallines Material wie Diamant, Zinkselenid (ZnSe) oder Germanium sein.

Das Grundmaterial kann u. a. durch Dotierung mit Fremdatomen, zum Beispiel mit Bor, und/oder durch Aufbringen einer Dünnschicht, zum Beispiel einer bordotierten CVD-Beschichtung, leitfähig gemacht werden. Im Fall der Dotierung ist der elektrisch leitfähige Materialbereich die mit den Fremdatomen dotierte Zone im Grundmaterial, die in Form einer Dotierungsschicht bis in eine definierte Tiefe reichen kann oder, wenn die Dotierung die gesamte Materialstärke durchdringt, das gesamte Grundmaterial umfasst. Im Fall des Aufbringens einer Dünnschicht, d. h. einer Beschichtung, ist der elektrisch leitfähige Materialbereich eine Auftragsschicht auf dem elektrisch nicht leitfähigen Grundmaterial.

Vorzugsweise ist die durch den elektrisch leitfähigen Materialbereich des optischen Elements gebildete spannungsführende Elektrode der Elektrolysezelle als Kathode der Elektrolysezelle ausgestaltet. Die Gegenelektrode ist entsprechend als Anode geschaltet.

Das optische Element kann für optische Anwendungen dauerhaft zusammen mit der Gegenelektrode installiert sein, d. h., die selbstreinigende Optikeinheit ist eine Dauerinstallation. Möglich ist alternativ auch eine temporäre Installation der Gegenelektrode gegenüber dem optischen Element, d. h. eine temporäre Installation der selbstreinigenden Optikeinheit für die Zwecke der elektrochemischen Reinigung.

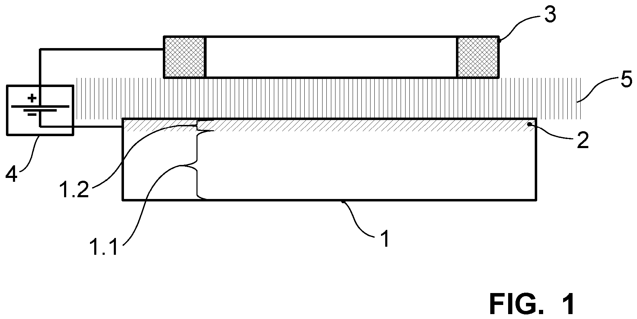

Die Erfindung ist nachfolgend anhand eines Ausführungsbeispiels und mit Bezug auf die schematische Zeichnung erläutert. Hierzu zeigt die Fig. 1 die selbstreinigende Optikeinheit mit dem elektrochemisch reinigbaren optischen Element 1.

Das für Infrarotanwendungen vorgesehene optische Element 1 gemäß Fig. 1 besteht aus Diamant als Grundmaterial 1.1 und ist an der Oberfläche mit einer Bor-Dotierung versehen. Durch die Dotierung bildet sich der elektrisch leitfähige Materialbereich 1.2 aus, der gleichzeitig auch die Elektrode 2 darstellt, die im Ausführungsbeispiel als Kathode geschaltet an die Spannungsquelle 4 (Gleichspannungsquelle) angeschlossen ist.

Der durch den elektrisch leitfähigen Materialbereich 1.2 des optischen Elements 1 gebildeten Elektrode 2 gegenüberliegend ist die als Anode an die Spannungsquelle 4 angeschlossene Gegenelektrode 3 angeordnet. Im Ausführungsbeispiel ist die Gegenelektrode 3 als Ringelektrode ausgebildet, die in räumlicher Nähe zum optischen Element 1 positioniert ist.

Zur elektrochemischen Reinigung wird eine elektrische Spannung in Form einer Gleichspannung zwischen dem elektrisch leitfähigen Materialbereich 1.2, d. h. der Elektrode 2, und der Gegenelektrode 3 angelegt. Den Zwischenraum zwischen dem elektrisch leitfähigen Materialbereich 1.2 und der Gegenelektrode 3 füllt das elektrisch leitfähige Fluid 5 aus, welches die elektrolytisch aktive Umgebung für die elektrochemische Reinigung bildet.

### Bezugszeichenliste

- 1: optisches Element
- 1.1: Grundmaterial
- 1.2: elektrisch leitfähiger Materialbereich
- 2: Elektrode
- 3: Gegenelektrode
- 4: Spannungsquelle
- 5: elektrisch leitfähiges Fluid

## Patentansprüche

1. Optisches Element (1) aus einem elektrisch nicht leitfähigen, für elektromagnetische Strahlung zumindest in einem vorgegebenen Spektralbereich durchlässigen Grundmaterial (1.1), wobei das optische Element (1) zumindest in seinem freien, optisch aktiven Oberflächenbereich einen durch Dotierung des Grundmaterials (1.1) und/oder Aufbringen einer elektrisch leitfähigen Beschichtung erzeugten elektrisch leitfähigen Materialbereich (1.2) aufweist, wobei der elektrisch leitfähige Materialbereich (1.2) für elektromagnetische Strahlung zumindest in dem vorgegebenen Spektralbereich durchlässig ist, **dadurch gekennzeichnet, dass** der elektrisch leitfähige Materialbereich (1.2) zur elektrochemischen Reinigung des optischen Elements (1) eine spannungsführende Elektrode (2) einer Elektrolysezelle ist.

2. Optisches Element (1) nach Anspruch 1, **dadurch gekennzeichnet, dass** die durch den elektrisch leitfähigen Materialbereich (1.2) des optischen Elements (1) gebildete spannungsführende Elektrode (2) der Elektrolysezelle die Kathode der Elektrolysezelle ist.

3. Optisches Element (1) nach Anspruch 1 oder 2, **dadurch gekennzeichnet, dass** das Grundmaterial (1.1) ein kristallines Material in Form von Diamant, Zinkselenid oder Germanium ist.

4. Optisches Element (1) nach einem der Ansprüche 1 bis 3, **dadurch gekennzeichnet, dass** der elektrisch leitfähige Materialbereich (1.2) durch Dotierung mit Fremdatomen gebildet ist.

5. Optisches Element (1) nach Anspruch 4, **dadurch gekennzeichnet, dass** der elektrisch leitfähige Materialbereich (1.2) durch Dotierung mit Bor gebildet ist.

6. Optisches Element (1) nach einem der Ansprüche 1 bis 3, **dadurch gekennzeichnet, dass** der elektrisch leitfähige Materialbereich (1.2) eine bordotierte CVD-Beschichtung ist.

7. Selbstreinigende Optikeinheit zum Einsatz in einer ein elektrisch leitfähiges Fluid (5) enthaltenden elektrolytisch aktiven Umgebung, wobei die selbstreinigende Optikeinheit aufweist:
- ein optisches Element (1) nach einem der Ansprüche 1 bis 6,
- eine Gegenelektrode (3), die in einem vorgegebenen räumlichen Abstand zu der durch den elektrisch leitfähigen Materialbereich (1.2) des optischen Elements (1) gebildeten Elektrode (2) angeordnet ist,
- eine Spannungsquelle (4), die mit einem Pol an die durch den elektrisch leitfähigen Materialbereich (1.2) des optischen Elements (1) gebildete Elektrode (2) und mit dem anderen Pol an die Gegenelektrode (3) zur Ausbildung eines elektrischen Feldes zwischen der durch den elektrisch leitfähigen Materialbereich (1.2) des optischen Elements (1) gebildeten Elektrode (2) und der Gegenelektrode (3) angeschlossen ist.

8. Selbstreinigende Optikeinheit nach Anspruch 7, **dadurch gekennzeichnet, dass** die selbstreinigende Optikeinheit das elektrisch leitfähige Fluid (5) der elektrolytisch aktiven Umgebung umfasst, wobei die durch den elektrisch leitfähigen Materialbereich (1.2) des optischen Elements (1) gebildete Elektrode (2), die Gegenelektrode (3) und das den Zwischenraum zwischen der durch den elektrisch leitfähigen Materialbereich (1.2) des optischen Elements (1) gebildeten Elektrode (2) und der Gegenelektrode (3) ausfüllende elektrisch leitfähige Fluid (5) die Elektrolysezelle bilden.

9. Selbstreinigende Optikeinheit nach Anspruch 7 oder 8, **dadurch gekennzeichnet, dass** die Gegenelektrode (3) eine Ringelektrode ist.

10. Selbstreinigende Optikeinheit nach einem der Ansprüche 7 bis 9, **dadurch gekennzeichnet, dass** die Optikeinheit eine Infrarot-Messzelle oder Teil einer Infrarot-Messzelle ist.
